# EUROPEAN PATENT APPLICATION

(11) **EP 4 838 059 A1**
(43) Date of publication of application: **11.11.2026**
(21) Application number: 26174601.0
(22) Date of filing: 24.04.2026
(51) Int. Cl.: F01D 25/16, F02K 3/06

(54) **TURBINE ENGINE INCLUDING ONE OR MORE FAN BEARINGS HAVING A FAN BEARING ENVELOPE**

(30) Priority: 07.05.2025 US 202519201361
(71) Applicant: General Electric Company, Cincinnati, Ohio 45215 (US)
(72) Inventor: MILLER, Brandon, Evendale, 45241 (US); SIBBACH, Arthur, Lynn, 01910 (US); ROEHM, Ryan, Evendale, 45241 (US); NIERGARTH, Daniel, Evendale, 45241 (US); VONDRELL, Randy, Evendale, 45241 (US)
(74) Representative: Openshaw & Co.

(57) **Abstract**

A turbine engine (110, 210) includes a fan (138, 252), a fan hub (148, 257), and one or more fan bearings (300, 400, 500). The fan (138, 252) includes a plurality of fan blades (140, 254) coupled to a fan disk (142) that is drivingly coupled to a fan shaft (145, 256). The fan disk (142) defines a disk bore (159). The fan bearings (300, 400, 500) support rotation of the fan shaft (145, 256) and include one or more rolling elements (302, 402, 502). The fan bearings (300, 400, 500) are positioned axially aft of the fan disk (142) and radially outward of the disk bore (159) of the fan disk (142), and are characterized by a fan bearing envelope in a range of 54 mm/N to 240 mm/N. The fan bearing envelope is given by: $\left(\frac{{R}_{FBRG}}{{R}_{FHTE}}\right) \times \left(\frac{{D}_{FB}}{\left(\frac{{Thrust}_{TO}}{1000}\right)}\right)$. R_{FBRG} is a fan bearing radius of the fan bearings (300, 400, 500). R_{FHTE} is a fan hub trailing edge radius of the fan hub (148, 257). D_{FB} is a rolling element diameter of the rolling elements (302, 402, 502). Thrust_{TO} is a takeoff thrust of the turbine engine (110, 210).

## Description

### TECHNICAL FIELD

The present disclosure relates generally to fan bearings for turbine engines.

### BACKGROUND

Turbine engines, for example, for an aircraft, generally include a fan having fan blades coupled to a fan shaft and a turbo-engine arranged in flow communication with one another. Some turbine engines include one or more fan bearings for supporting rotation of the fan shaft.

### BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, or structurally similar elements.
FIG. 1 is a schematic cross-sectional diagram of a turbine engine, taken along a longitudinal centerline axis of the turbine engine, according to the present disclosure.
FIG. 2 shows a schematic view of an unducted, three-stream turbine engine.
FIG. 3 is an enlarged, schematic, cross-sectional diagram of the turbine engine of FIG. 1 and having one or more fan bearings, taken at detail 3 in FIG. 1, according to the present disclosure.
FIG. 4 is an enlarged, schematic, cross-sectional diagram of the turbine engine of FIG. 1 and having one or more fan bearings, taken along the longitudinal centerline axis, according to another embodiment.
FIG. 5 is a schematic cross-sectional view of a fan bearing for the turbine engine of FIG. 1, according to another embodiment.
FIG. 6 represents, in graph form, a fan bearing envelope as a function of a takeoff thrust of the turbine engine, according to the present disclosure.
FIG. 7 represents, in graph form, the fan bearing envelope as a function of the takeoff thrust, according to another embodiment.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first," "second," "third," and "fourth" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or vehicle, and refer to the normal operational attitude of the turbine engine or vehicle. More particularly, forward and aft are used herein with reference to a direction of travel of the vehicle and a direction of propulsive thrust of the gas turbine engine.

As used herein, the terms "low," "mid" (or "mid-level"), and "high," or their respective comparative degrees (e.g., "lower" and "higher", where applicable), when used with compressor, combustor, turbine, shaft, fan, or turbine engine components, each refers to relative pressures, relative speeds, relative temperatures, or relative power outputs within an engine unless otherwise specified. For example, a "low-power" setting defines the engine or the combustor configured to operate at a power output lower than a "high-power" setting of the engine or the combustor, and a "mid-level power" setting defines the engine or the combustor configured to operate at a power output higher than a "low-power" setting and lower than a "high-power" setting. The terms "low," "mid" (or "mid-level") or "high" in such aforementioned terms may additionally, or alternatively, be understood as relative to minimum allowable speeds, pressures, or temperatures, or minimum or maximum allowable speeds, pressures, or temperatures relative to normal, desired, steady state, etc., operation of the engine. A mission cycle for a turbine engine includes, for example, a low-power operation, a mid-level power operation, and a high-power operation. Low-power operation includes, for example, engine start, idle, taxiing, and approach. Mid-level power operation includes, for example, cruise. High-power operation includes, for example, takeoff and climb.

The various power levels of the turbine engine are defined as a percentage of a sea level static (SLS) maximum engine rated thrust. Low power operation includes, for example, less than thirty percent (30%) of the SLS maximum engine rated thrust of the turbine engine. Mid-level power operation includes, for example, thirty percent (30%) to seventy-five percent (75%) of the SLS maximum engine rated thrust of the turbine engine. High power operation includes, for example, greater than seventy-five percent (75%) of the SLS maximum engine rated thrust of the turbine engine. The values of the thrust for each of the low power operation, the mid-level power operation, and the high power operation of the turbine engine are exemplary only, and other values of the thrust can be used to define the low power operation, the mid-level power operation, and the high power operation.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, a "turbo-engine" includes a compressor section, a combustion section, and a turbine section.

As used herein, a "turbine engine" includes a turbo-engine and a fan that directs air into the turbo-engine, and rated for use in a regional aircraft, narrow body aircraft, or wide body aircraft. A turbine engine rated for use on a regional aircraft will have a maximum takeoff thrust in a range of ten thousand pound-force to twenty thousand pound-force (10,000 lbf to 20,000 lbf). A turbine engine rated for use on a narrow body aircraft will have a maximum takeoff thrust in a range of fifteen thousand pound-force to thirty thousand pound-force (15,000 lbf to 30,000 lbf). A turbine engine rated for use on a wide body aircraft will have a maximum takeoff thrust in a range of forty thousand pound-force to one hundred ten thousand pound-force (40,000 lbf to 110,000 lbf).

As used herein, the term "cruise" or "cruising speed" refers to operation of a turbine engine utilized to power an aircraft that may operate at a cruising speed when the aircraft levels in altitude after climbing to a specified altitude. A turbine engine may operate at a cruising speed that is from 50% to 90% of a rated speed, such as from 70% to 80% of the rated speed. In some embodiments, a cruising speed may be achieved at about 80% of full throttle, such as from about 50% to about 90% of full throttle, such as from about 70% to about 80% full throttle. As used herein, the term "cruise flight" refers to a phase of flight in which an aircraft levels in altitude after a climb phase and prior to descending to an approach phase. In various examples, cruise flight may take place at a cruise altitude up to approximately 65,000 ft. In certain examples, cruise altitude is between approximately 28,000 ft. and approximately 45,000 ft. In yet other examples, cruise altitude is expressed in flight levels (FL) based on a standard air pressure at sea level, in which cruise flight is between FL280 and FL650. In another example, cruise flight is between FL280 and FL450. In still certain examples, cruise altitude is defined based at least on a barometric pressure, in which cruise altitude is between approximately 4.85 psia and approximately 0.82 psia based on a sea-level pressure of approximately 14.70 psia and sea-level temperature at approximately 59 degrees Fahrenheit. In another example, cruise altitude is between approximately 4.85 psia and approximately 2.14 psia. In certain examples, the ranges of cruise altitude defined by pressure may be adjusted based on a different reference sea-level pressure, a sea-level temperature, or both.

As used herein, "takeoff thrust" is a maximum operating thrust of the turbine engine during takeoff conditions. Takeoff thrust is a high power operation and includes, for example, greater than seventy-five percent (75%) of the SLS maximum engine rated thrust of the turbine engine. As used herein, the term "takeoff" or "takeoff conditions" refers to operation of a turbine engine utilized to power an aircraft that may operate at a takeoff thrust when the aircraft is taking off.

As used herein, the term "ducted engine" means a turbine engine with a fan casing or a nacelle that circumferentially surrounds the fan.

As used herein, an "unducted fan engine" or an "open fan engine" means a turbine engine without a fan casing or a nacelle surrounding the fan.

Hereafter, the term "turbine engine" will refer to either a "ducted engine" or an "open fan engine."

As used herein, a "fan bearing radius" of a fan bearing is defined in the radial direction from the longitudinal centerline axis of the turbine engine to a radial center of the fan bearing. Particularly, the radial center of the fan bearing is a radial center of the rolling elements of the fan bearing.

As used herein, a "rolling element diameter" of a rolling element of the fan bearing is a distance of a straight line passing from side to side through a center of the rolling element.

As used herein, a "fan hub trailing edge radius" of a fan hub is defined in the radial direction from the longitudinal centerline axis to the fan hub at a trailing edge of the fan blades.

Here and throughout the specification and claims, range limitations are combined and interchanged. Such ranges are identified and include all the sub-ranges contained therein unless context or language indicates otherwise. For example, all ranges disclosed herein are inclusive of the endpoints, and the endpoints are independently combinable with each other.

The present disclosure provides for turbine engines that include one or more fan bearings that support rotation of the fan shaft. Typically, the fan bearings are positioned as close to a longitudinal centerline axis of the turbine engine as possible so that the fan components and the engine components, such as, for example, the fan disk, the gearbox assembly, sump seals, etc., can be built outward of the fan bearings. In this way, placing the fan bearings close to the longitudinal centerline axis of the turbine engine helps to minimize or otherwise reduce the radial extent of the turbine engine. Such a configuration of the fan bearings helps to minimize or to reduce a rotational speed of the fan bearings, while also improving fan performance by improving fan tip to case clearance. Further, placing the fan bearings under the fan disk minimizes the axial length of the space under the fan, thus, minimizing the overall axial length of the turbine engine, and, in turn, minimizing a size and a weight of the turbine engine. Such a configuration of the fan bearings, however, requires a lesser diameter of the fan bearings, and, thus, there is a lesser amount of circumferential space available for the rolling elements of the fan bearings. Accordingly, the fan bearings require relatively large rolling elements and a fewer number of rolling elements to account for the stresses the fan bearings encounter from the fan shaft. Further, placing the fan bearings under the fan disk can push out the fan disk to a greater fan disk radius, and, thus, a greater fan hub radius ratio. This leads to reduced aerodynamic efficiency (e.g., measured by a lift-to-drag ratio) of the fan.

The inventors, seeking a need to find a solution to this problem, designed and tested several different turbine engine architectures in an effort to arrive at a fan bearing architecture that met both the stress requirements and the rotational speed requirements, as well as the sizing requirements of that area of the turbine engine.

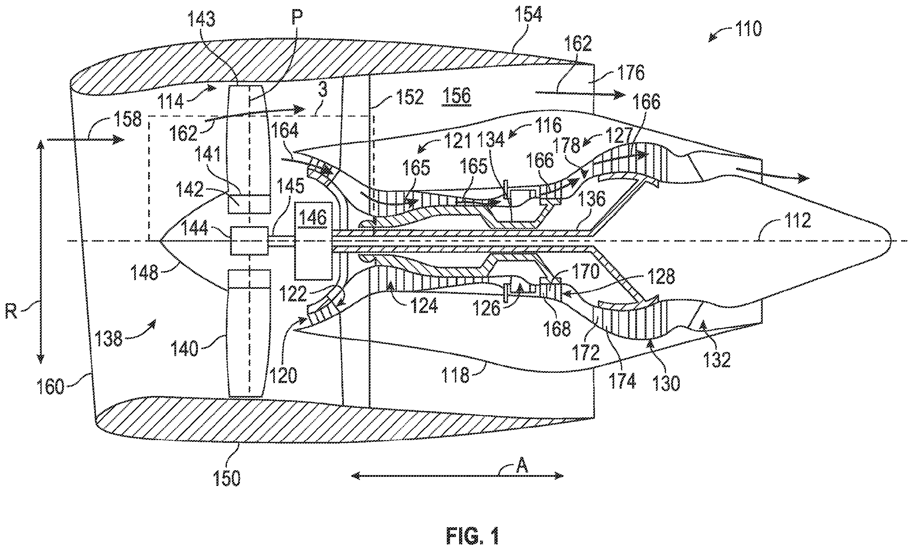

Referring now to the drawings, FIG. 1 is a schematic cross-sectional diagram of a turbine engine 110, taken along a longitudinal centerline axis 112 of the turbine engine 110, according to an embodiment of the present disclosure. As shown in FIG. 1, the turbine engine 110 defines an axial direction A (extending parallel to the longitudinal centerline axis 112 provided for reference) and a radial direction R that is normal to the axial direction A. In general, the turbine engine 110 includes a fan assembly 114 and a turbo-engine 116 disposed downstream from the fan assembly 114.

The turbo-engine 116 includes, in serial flow relationship, a compressor section 121, a combustion section 126, and a turbine section 127. The turbo-engine 116 depicted is substantially enclosed within a core cowl 118 that is substantially tubular and defines a core inlet 120 having an annular shape that is annular about the longitudinal centerline axis 112. As schematically shown in FIG. 1, the compressor section 121 includes a booster or a low-pressure (LP) compressor 122 followed downstream by a high-pressure (HP) compressor 124. The combustion section 126 is downstream of the compressor section 121 and includes a combustor. The turbine section 127 is downstream of the combustion section 126 and includes a high-pressure (HP) turbine 128 followed downstream by a low-pressure (LP) turbine 130, also referred to as a power turbine. The turbo-engine 116 also includes a core exhaust nozzle 132 that is downstream of the turbine section 127. The turbo-engine 116 further includes a high-pressure (HP) shaft 134, also referred to as a high-speed shaft, that drivingly connects the HP
turbine 128 to the HP compressor 124. The HP turbine 128 and the HP compressor 124 rotate in unison through the HP shaft 134. The turbo-engine 116 includes a low-pressure (LP) shaft 136, also referred to as a low-speed shaft, that drivingly connects the LP turbine 130 to the LP compressor 122. The LP turbine 130 and the LP compressor 122 rotate in unison through the LP shaft 136. The compressor section 121, the combustion section 126, the turbine section 127, and the core exhaust nozzle 132 together define a core air flow path.

For the embodiment depicted in FIG. 1, the fan assembly 114 includes a
fan 138 (e.g., a variable pitch fan) having a plurality of fan blades 140 coupled to a fan disk 142 in a spaced apart manner. As depicted in FIG. 1, the fan blades 140 extend outwardly from the fan disk 142 generally along the radial direction R from a fan root 141 to a fan tip 143. Each fan blade 140 is rotatable relative to the fan disk 142 about a pitch axis P by virtue of the fan blades 140 being operatively coupled to a fan actuation system 144 configured to collectively vary the pitch of the fan blades 140 in unison, as detailed further below. The fan actuation system 144 is disposed within a fan hub 148. The fan blades 140, the fan disk 142, and the fan actuation system 144 are together rotatable about the longitudinal centerline axis 112 via a fan shaft 145 that is powered by the LP shaft 136 across a power gearbox, also referred to as a gearbox assembly 146.

The gearbox assembly 146 is shown schematically in FIG. 1. The gearbox assembly 146 includes a plurality of gears for adjusting the rotational speed of the fan shaft 145 and, thus, the fan 138 relative to the LP shaft 136. The gearbox assembly 146 has a gear ratio in a range of 3.5:1 to 5:1 for a ducted engine (e.g., the turbine engine 110). The LP shaft 136, the gearbox assembly 146, and the fan shaft 145 are disposed in an in-line configuration such that the LP shaft 136, the gearbox assembly 146, and the fan shaft 145 are coaxial and are each disposed about the longitudinal centerline axis 112. The in-line configuration helps to reduce the space needed within the turbine engine 110 for the gearbox assembly 146 and allows a greater amount of torque to be transferred from the LP shaft 136 to the fan shaft 145 through the gearbox assembly 146, as compared to turboprop engines in which the gearbox assembly is typically disposed in a stepped configuration and is not coaxial with the LP shaft and the fan shaft.

Referring still to the exemplary embodiment of FIG. 1, the fan disk 142 is covered by a fan hub 148 that rotates and is aerodynamically contoured to promote an airflow through the plurality of fan blades 140. In addition, the fan assembly 114 includes an annular fan casing or a nacelle 150 that circumferentially surrounds the fan 138 and at least a portion of the turbo-engine 116. In this way, the turbine engine 110 is a ducted engine. The nacelle 150 is supported relative to the turbo-engine 116 by a plurality of fan guide vanes 152, also referred to as outlet guide vanes, that is spaced circumferentially about the nacelle 150. Moreover, a downstream section 154 of the nacelle 150 extends over an outer portion of the turbo-engine 116 to define a bypass airflow passage 156 therebetween.

During operation of the turbine engine 110, a volume of air 158 enters the turbine engine 110 through an inlet 160 of the nacelle 150 or the fan assembly 114. As the volume of air 158 passes across the fan blades 140, a first portion of air, referred to as bypass air 162, is directed or routed into the bypass airflow passage 156, and a second portion of air, referred to as core air 164, is directed or is routed into the upstream section of the core air flow path, or, more specifically, into the core inlet 120 of the LP compressor 122. The ratio between the bypass air 162 and the core air 164 is commonly known as a bypass ratio. The pressure of the core air 164 is then increased by the LP compressor 122 to form compressed air 165, and the compressed air 165 is routed through the HP compressor 124 and into the combustion section 126, where the compressed air 165 is mixed with fuel and burned to generate combustion gases 166.

The combustion gases 166 are routed into the HP turbine 128 and expanded through the HP turbine 128 where a portion of thermal energy and kinetic energy from the combustion gases 166 is extracted via one or more stages of HP turbine stator vanes 168 that are coupled to the core cowl 118 and HP turbine rotor blades 170 that are coupled to the HP shaft 134. This causes the HP shaft 134 to rotate, thereby supporting operation of the HP compressor 124 (e.g., a self-sustaining cycle). In this way, the combustion gases 166 do work in the HP turbine 128 to cause the HP turbine rotor blades 170 (and the HP shaft 134) to rotate at a sufficient rate to maintain the compression ratio of the HP compressor 124 (e.g., self-sustaining cycle). The combustion gases 166 are then routed into the LP turbine 130 and expanded through the LP turbine 130. Here, a second portion of the thermal energy and the kinetic energy is extracted from the combustion gases 166 via one or more stages of LP turbine stator vanes 172 that are coupled to the core cowl 118 and LP turbine blades 174 that are coupled to the LP shaft 136. This causes the LP shaft 136 to rotate, thereby supporting operation of the LP compressor 122 and rotation of the fan 138 via the gearbox assembly 146 (e.g., a self-sustaining cycle). In this way, the combustion gases 166 do work in the LP turbine 130 to cause the LP turbine blades 174 (and the LP shaft 136) to rotate.

The combustion gases 166 are subsequently routed through the core exhaust nozzle 132 of the turbo-engine 116 to provide propulsive thrust at a thrust level of the turbine engine 110. The thrust level of the turbine engine 110 includes a cruise thrust level defined by a cruise Mach number M_{cruise} that is the Mach number of the turbine engine 110 at cruise conditions, or mid-level power conditions. Simultaneously, the bypass air 162 is directed through the bypass airflow passage 156 before being exhausted from a fan exhaust nozzle 176 of the turbine engine 110, also providing propulsive thrust. The HP turbine 128, the LP turbine 130, and the core exhaust nozzle 132 at least partially define a hot gas path 178 for routing the combustion gases 166 through the turbo-engine 116.

The turbine engine 110 depicted in FIG. 1 is by way of example only. In other exemplary embodiments, the turbine engine 110 may have other suitable configurations. In other exemplary embodiments, any other suitable number or configuration of compressors, turbines, shafts, or a combination thereof may be provided. The turbine engine 110 may also be a direct drive engine, which does not have a power gearbox. The fan speed is the same as the LP shaft speed for a direct drive engine. In still other exemplary embodiments, aspects of the present disclosure may be incorporated into other suitable turbine engines, such as, for example, propfan (e.g., unducted fan) engines.

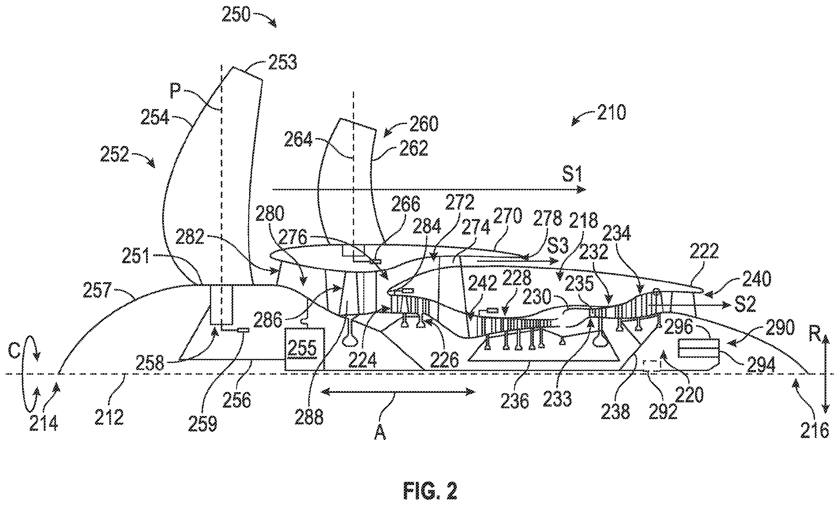

FIG. 2 shows a schematic view of an unducted, three-stream, turbine engine 210 for an aircraft, that may incorporate one or more embodiments of the present disclosure. In this way, the turbine engine 210 is an unducted fan engine or an open fan engine. The turbine engine 210 is a "three-stream engine" in that its architecture provides three distinct streams (labeled S1, S2, and S3) of thrust-producing airflow during operation, as detailed further below.

As shown in FIG. 2, the turbine engine 210 defines an axial direction A, a radial direction R, and a circumferential direction C. Moreover, the turbine engine 210 defines a longitudinal centerline axis 212 that extends along the axial direction A. In general, the axial direction A extends parallel to the longitudinal centerline axis 212, the radial direction R extends outward from, and inward to, the longitudinal centerline axis 212 in a direction orthogonal to the axial direction A, and the circumferential direction C extends three hundred sixty degrees (360°) around the longitudinal centerline axis 212. The turbine engine 210 extends between a forward end 214 and an aft end 216, e.g., along the axial direction A.

The turbine engine 210 includes a turbo-engine 220 and a fan assembly 250 positioned upstream thereof. Generally, the turbo-engine 220 includes a compressor section, a combustion section, a turbine section, and an exhaust section. Particularly, as shown in FIG. 2, the turbo-engine 220 includes an engine core 218 and a core cowl 222 that annularly surrounds the turbo-engine 220. The turbo-engine 220 and the core cowl 222 define a core inlet 224 having an annular shape that is annular about the longitudinal centerline axis 212. The core cowl 222 further encloses and supports a low-pressure (LP) compressor 226 (also referred to as a booster) for pressurizing the air that enters the turbo-engine 220 through the core inlet 224. A high-pressure (HP) compressor 228 receives pressurized air from the LP compressor 226 and further increases the pressure of the air. The pressurized air flows downstream to a combustor 230 where fuel is injected into the pressurized air and ignited to raise the temperature and the energy level of the pressurized air, thereby generating combustion gases.

The combustion gases flow from the combustor 230 downstream to a high-pressure (HP) turbine 232. The HP turbine 232 drives the HP compressor 228 through a first shaft, also referred to as a high-pressure (HP) shaft 236 (also referred to as a "high-speed shaft"). In this regard, the HP turbine 232 is drivingly coupled with the HP compressor 228. Together, the HP compressor 228, the combustor 230, and the HP turbine 232 define the engine core 218. The combustion gases then flow to a power turbine or a low-pressure (LP) turbine 234. The LP turbine 234 drives the LP compressor 226 and components of the fan assembly 250 through a second shaft, also referred to as a low-pressure (LP) shaft 238 (also referred to as a "low-speed shaft"). In this regard, the LP turbine 234 is drivingly coupled with the LP compressor 226 and components of the fan assembly 250. The LP shaft 238 is coaxial with the HP shaft 236 in the embodiment of FIG. 2. After driving each of the HP turbine 232 and the LP turbine 234, the combustion gases exit the turbo-engine 220 through a core exhaust nozzle 240. The turbo-engine 220 defines a core flowpath, also referred to as a core duct 242, that extends between the core inlet 224 and the core exhaust nozzle 240. The core duct 242 is an annular duct positioned generally inward of the core cowl 222 along the radial direction R.

The fan assembly 250 includes a fan 252, also referred to as a primary fan. For the embodiment of FIG. 2, the fan 252 is an open rotor fan, also referred to as an unducted fan. However, in other embodiments, the fan 252 may be ducted, e.g., by a fan casing or a nacelle circumferentially surrounding the fan 252, similar to the embodiment of FIG. 1. The fan 252 includes a plurality of fan blades 254 (only one shown in FIG. 2) that extends in the radial direction R from a fan root 251 to a fan tip 253. The plurality of fan blades 254 is rotatable about the longitudinal centerline axis 212 via a fan shaft 256. As shown in FIG. 2, the fan shaft 256 is coupled with the LP shaft 238 via a speed reduction gearbox or a power gearbox, also referred to as a gearbox assembly 255, e.g., in an indirect-drive configuration.

The gearbox assembly 255 is shown schematically in FIG. 2. The gearbox assembly 255 includes a plurality of gears for adjusting the rotational speed of the fan shaft 256 and, thus, the fan 252 relative to the LP shaft 238 to a more efficient rotational fan speed. The gearbox assembly may have a gear ratio of 4:1 to 12:1, or 7:1 to 12:1, or 4:1 to 10:1, or 5:1 to 9:1, or 6:1 to 9:1, and may be configured in an epicyclic star or a planet gear configuration. Preferably, the gearbox assembly has a gear ratio of 4:1 to 10:1 for an unducted fan engine (e.g., the turbine engine 210). The gearbox may be a single stage gearbox or a compound gearbox (e.g., having a plurality of stages). The LP shaft 238, the gearbox assembly 255, and the fan shaft 256 are disposed in an in-line configuration such that the LP shaft 238, the gearbox assembly 255, and the fan shaft 256 are coaxial and are each disposed about the longitudinal centerline axis 212.

The fan blades 254 can be arranged in equal spacing around the longitudinal centerline axis 212. Each fan blade 254 extends outwardly from a disk (not shown in FIG. 2) generally along the radial direction R. The disk is covered by a fan hub 257 that is rotatable and aerodynamically contoured to promote an airflow through the plurality of fan blades 254. Each fan blade 254 has a root and a tip, and a span defined therebetween. Each of the plurality of fan blades 254 defines a pitch axis P. For the embodiment of FIG. 2, each of the plurality of fan blades 254 of the fan 252 is rotatable about their respective pitch axis P, e.g., in unison with one another. A fan actuation system 258 controls one or more actuators 259 to pitch the fan blades 254 about their respective pitch axis P. The fan actuation system 258 is disposed within the fan hub 257.

The fan assembly 250 further includes a fan guide vane array 260 that includes a plurality of fan guide vanes 262 (only one shown in FIG. 2) disposed around the longitudinal centerline axis 212. For the embodiment of FIG. 2, the plurality of fan guide vanes 262 is not rotatable about the longitudinal centerline axis 212. Each of the plurality of fan guide vanes 262 has a root and a tip, and a span defined therebetween. The plurality of fan guide vanes 262 can be unshrouded as shown in FIG. 2 or can be shrouded, e.g., by an annular shroud spaced outward from the tips of the fan guide vanes 262 along the radial direction R. Each of the plurality of fan guide vanes 262 defines a vane pitch axis 264. For the embodiment of FIG. 2, each of the plurality of fan guide vanes 262 of the fan guide vane array 260 is rotatable about their respective vane pitch axis 264, e.g., in unison with one another. One or more actuators 266 are controlled to pitch the plurality of fan guide vanes 262 about their respective vane pitch axis 264. In other embodiments, each of the plurality of fan guide vanes 262 is fixed or is unable to be pitched about the vane pitch axis 264. The plurality of fan guide vanes 262 is mounted to a fan cowl 270.

The fan cowl 270 annularly encases at least a portion of the core cowl 222 and is generally positioned outward of the core cowl 222 along the radial direction R. Particularly, a downstream section of the fan cowl 270 extends over a forward portion of the core cowl 222 to define a fan flowpath, also referred to as a fan duct 272. Incoming air enters through the fan duct 272 through a fan duct inlet 276 and exits through a fan exhaust nozzle 278 to produce propulsive thrust. The fan duct 272 is an annular duct positioned generally outward of the core duct 242 along the radial direction R. The fan cowl 270 and the core cowl 222 are connected together and supported by a plurality of struts 274 (only one shown in FIG. 2) that extends substantially radially and are circumferentially spaced about the longitudinal centerline axis 212. The plurality of struts 274 is each aerodynamically contoured to direct air flowing thereby. Other struts, in addition to the plurality of struts 274, can be used to connect and to support the fan cowl 270 and the core cowl 222.

The turbine engine 210 also defines or includes an inlet duct 280. The inlet duct 280 extends between an engine inlet 282 and the core inlet 224 and the fan duct inlet 276. The engine inlet 282 is defined generally at the forward end of the fan cowl 270 and is positioned between the fan 252 and the fan guide vane array 260 along the axial direction A. The inlet duct 280 is an annular duct that is positioned inward of the fan cowl 270 along the radial direction R. Air flowing downstream along the inlet duct 280 is split, not necessarily evenly, into the core duct 242 and the fan duct 272 by a splitter 284 of the core cowl 222. The inlet duct 280 is wider than the core duct 242 along the radial direction R. The inlet duct 280 is also wider than the fan duct 272 along the radial direction R.

The fan assembly 250 also includes a mid-fan 286. The mid-fan 286 includes a plurality of mid-fan blades 288 (only one shown in FIG. 2). The plurality of mid-fan blades 288 is rotatable, e.g., about the longitudinal centerline axis 212. The mid-fan 286 is drivingly coupled with the LP turbine 234 via the LP shaft 238. The plurality of mid-fan blades 288 can be arranged in equal circumferential spacing about the longitudinal centerline axis 212. The plurality of mid-fan blades 288 is annularly surrounded (e.g., ducted) by the fan cowl 270. In this regard, the mid-fan 286 is positioned inward of the fan cowl 270 along the radial direction R. The mid-fan 286 is positioned within the inlet duct 280 upstream of both the core duct 242 and the fan duct 272. A ratio of a span of a fan blade 254 to that of a mid-fan blade 288 (a span is measured from a root to tip of the respective blade) is greater than two and less than ten, to achieve the desired benefits of the third stream (S3), particularly, the additional thrust the third stream (S3) offers to the engine, which can enable a smaller diameter fan blade 254 (benefits engine installation).

Accordingly, air flowing through the inlet duct 280 flows across the plurality of mid-fan blades 288 and is accelerated downstream thereof. At least a portion of the air accelerated by the mid-fan blades 288 flows into the fan duct 272 and is ultimately exhausted through the fan exhaust nozzle 278 to produce propulsive thrust. Also, at least a portion of the air accelerated by the plurality of mid-fan blades 288 flows into the core duct 242 and is ultimately exhausted through the core exhaust nozzle 240 to produce propulsive thrust. Generally, the mid-fan 286 is a compression device positioned downstream of the engine inlet 282. The mid-fan 286 is operable to accelerate air into the fan duct 272, also referred to as a secondary bypass passage.

During operation of the turbine engine 210, an initial airflow or an incoming airflow passes through the fan blades 254 of the fan 252 and splits into a first airflow and a second airflow. The first airflow bypasses the engine inlet 282 and flows generally along the axial direction A outward of the fan cowl 270 along the radial direction R. The first airflow accelerated by the fan blades 254 passes through the fan guide vanes 262 and continues downstream thereafter to produce a primary propulsion stream or a first thrust stream S1. A majority of the net thrust produced by the turbine engine 210 is produced by the first thrust stream S1. The second airflow enters the inlet duct 280 through the engine inlet 282.

The second airflow flowing downstream through the inlet duct 280 flows through the plurality of mid-fan blades 288 of the mid-fan 286 and is consequently compressed. The second airflow flowing downstream of the mid-fan blades 288 is split by the splitter 284 located at the forward end of the core cowl 222. Particularly, a portion of the second airflow flowing downstream of the mid-fan 286 flows into the core duct 242 through the core inlet 224. The portion of the second airflow that flows into the core duct 242 is progressively compressed by the LP compressor 226 and the HP compressor 228, and is ultimately discharged into the combustion section. The discharged pressurized air stream flows downstream to the combustor 230 where fuel is introduced and the airstream and the fuel are combusted to generate combustion gases or products.

The combustor 230 defines an annular combustion chamber that is generally coaxial with the longitudinal centerline axis 212. The combustor 230 receives pressurized air from the HP compressor 228 via a pressure compressor discharge outlet. A portion of the pressurized air flows into a mixer. Fuel is injected by a fuel nozzle (omitted for clarity) to mix with the pressurized air, thereby forming a fuel-air mixture that is provided to the combustion chamber for combustion. Ignition of the fuel-air mixture is accomplished by one or more igniters (omitted for clarity), and the resulting combustion gases flow along the axial direction A toward, and into, a first stage turbine nozzle 233 of the HP turbine 232. The first stage turbine nozzle 233 is defined by an annular flow channel that includes a plurality of radially extending, circumferentially spaced nozzle vanes 235 that turn the combustion gases so that the combustion gases flow angularly and impinge upon first stage turbine blades of the HP turbine 232. The combustion gases exit the HP turbine 232 and flow through the LP turbine 234, and exit the core duct 242 through the core exhaust nozzle 240 to produce a core air stream, also referred to as a second thrust stream S2. As noted above, the HP turbine 232 drives the HP compressor 228 via the HP shaft 236, and the LP turbine 234 drives the LP compressor 226, the fan 252, and the mid-fan 286 via the LP shaft 238.

The other portion of the second airflow flowing downstream of the mid-fan 286 is split by the splitter 284 into the fan duct 272. The air enters the fan duct 272 through the fan duct inlet 276. The air flows generally along the axial direction A through the fan duct 272 and is ultimately exhausted from the fan duct 272 through the fan exhaust nozzle 278 to produce a third stream, also referred to as a third thrust stream S3.

The third thrust stream S3 is a secondary air stream that increases fluid energy to produce a minority of total propulsion system thrust. In some embodiments, a pressure ratio of the third stream is higher than that of the primary propulsion stream (e.g., a bypass or a propeller driven propulsion stream). The thrust may be produced through a dedicated nozzle or through mixing of the secondary air stream with the primary propulsion stream or a core air stream, e.g., into a common nozzle. In certain embodiments, an operating temperature of the secondary air stream is less than a maximum compressor discharge temperature for the engine. Furthermore, in certain embodiments, aspects of the third stream (e.g., airstream properties, mixing properties, or exhaust properties), and thereby a percent contribution to total thrust, are passively adjusted during engine operation or can be modified purposefully through the use of engine control features (such as fuel flow, electric machine power, variable stators, variable inlet guide vanes, valves, variable exhaust geometry, or fluidic features) to adjust or to improve overall system performance across a broad range of potential operating conditions.

The turbine engine 210 depicted in FIG. 2 is by way of example only. In other embodiments, the turbine engine 210 may have other suitable configurations. For example, the fan 252 can be ducted by a fan casing or a nacelle such that a bypass passage is defined between the fan casing and the fan cowl 270. Moreover, in other embodiments, any other suitable number or configuration of compressors, turbines, shafts, or a combination thereof may be provided. In still other embodiments, aspects of the present disclosure may be incorporated into any other suitable turbine engine, such as, for example, turbine engines defining two streams (e.g., a bypass stream and a core air stream).

Further, for the depicted embodiment of FIG. 2, the turbine engine 210 includes an electric machine 290 (e.g., a motor-generator) operably coupled with a rotating component thereof. In this regard, the turbine engine 210 is a hybrid-electric propulsion machine. Particularly, as shown in FIG. 2, the electric machine 290 is operatively coupled with the LP shaft 238. The electric machine 290 can be mechanically connected to the LP shaft 238, either directly, or indirectly, e.g., by way of a gearbox assembly 292 (shown schematically in FIG. 2). Further, although, in this embodiment the electric machine 290 is operatively coupled with the LP shaft 238 at an aft end of the LP shaft 238, the electric machine 290 can be coupled with the LP shaft 238 at any suitable location or can be coupled to other rotating components of the turbine engine 210, such as the HP shaft 236 or the LP shaft 238. For instance, in some embodiments, the electric machine 290 can be coupled with the LP shaft 238 and positioned forward of the mid-fan 286 along the axial direction A. In some embodiments, the turbine engine of FIG. 1 also includes an electric machine coupled to the LP shaft and located in the tail cone of the engine.

In some embodiments, the electric machine 290 can be an electric motor operable to drive or to motor the LP shaft 238. In other embodiments, the electric machine 290 can be an electric generator operable to convert mechanical energy into electrical energy. In this way, electrical power generated by the electric machine 290 can be directed to various engine systems or aircraft systems. In some embodiments, the electric machine 290 can be a motor/generator with dual functionality. The electric machine 290 includes a rotor 294 and a stator 296. The rotor 294 is coupled to the LP shaft 238 and rotates with rotation of the LP shaft 238. In this way, the rotor 294 rotates with respect to the stator 296, thereby generating electrical power. Although the electric machine 290 has been described and illustrated in FIG. 2 as having a particular configuration, the present disclosure may apply to electric machines having alternative configurations. For instance, the rotor 294 or the stator 296 may have different configurations or may be arranged in a different manner than illustrated in FIG. 2.

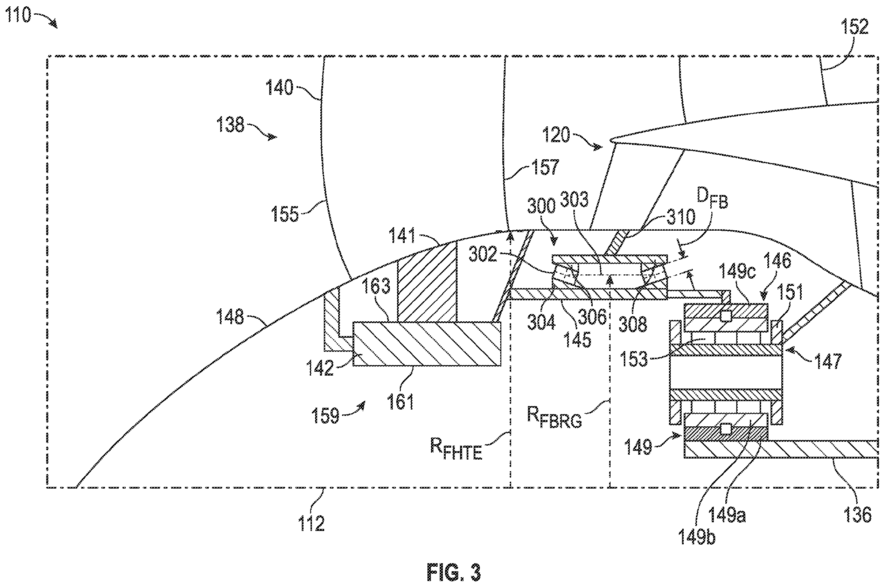

FIG. 3 is an enlarged, schematic, cross-sectional diagram of the turbine engine 110 and having one or more fan bearings 300, taken along the longitudinal centerline axis 112, according to the present disclosure. FIG. 3 shows one fan blade 140 of the fan 138, the fan disk 142, the core inlet 120, and the gearbox assembly 146. The gearbox assembly 146 includes a gear assembly 147 having a plurality of gears 149 including a first gear 149a, one or more second gears 149b secured by a planet carrier 151, and a third gear 149c. In FIG. 3, the first gear 149a is a sun gear, the one or more second gears 149b are planet gears, and the third gear 149c is a ring gear. The gear assembly 147 is an epicyclic gear assembly. When the gear assembly 147 is an epicyclic gear assembly, the one or more second gears 149b include a plurality of second gears 149b (e.g., two or more second gears 149b).

In the epicyclic gear assembly, the gear assembly 147 can be in a star arrangement or a rotating ring gear type gear assembly (e.g., the third gear 149c is rotating and the planet carrier 151 is fixed and stationary). In such an arrangement, the fan 138 is driven by the third gear 149c. For example, the third gear 149c is coupled to the fan shaft 145 such that rotation of the third gear 149c causes the fan shaft 145, and, thus, the fan 138, to rotate. In this way, the third gear 149c is an output of the gear assembly 147. However, other suitable types of gear assemblies may be employed. In one non-limiting embodiment, the gear assembly 147 is a planetary arrangement, in which the third gear 149c is held fixed, with the planet carrier 151 allowed to rotate. In such an arrangement, the fan 138 is driven by the planet carrier 151. For example, the planet carrier 151 is coupled to the fan shaft 145 such that rotation of the planet carrier 151 causes the fan shaft 145, and, thus, the fan 138, to rotate. In this way, the one or more second gears 149b (e.g., via the planet carrier 151) are the output of the gear assembly 147. In another non-limiting embodiment, the gear assembly 147 may be a differential gear assembly in which the third gear 149c and the planet carrier 151 are both allowed to rotate. While an epicyclic gear assembly is detailed herein, the gear assembly can include any type of gear assembly including, for example, a single stage gear assembly or a compound gear assembly (e.g., a gear assembly having a plurality of stages).

The plurality of gears 149 includes one or more gear bearings 153 disposed therein. For example, the one or more second gears 149b each includes one or more gear bearings 153 disposed therein. The one or more gear bearings 153 enable the plurality of gears 149 to rotate about the one or more gear bearings 153 such that the plurality of gears 149 rotates. The one or more gear bearings 153 can include any type of bearing for a gear, such as, for example, journal bearings, roller bearings, or the like. The gearbox assembly 146 can include a plurality of gear bearings that includes a forward gear bearing and an aft gear bearing. The one or more gear bearings 153 shown in the view of FIG. 3 are the forward gear bearing.

The first gear 149a is coupled to an input shaft of the turbine engine 110. For example, the first gear 149a is coupled to the LP shaft 136 such that rotation of the LP shaft 136 causes the first gear 149a to rotate. Radially outward of the first gear 149a, and intermeshing therewith, is the one or more second gears 149b that are coupled together and supported by the planet carrier 151. The planet carrier 151 supports and constrains the one or more second gears 149b such that each of the one or more second gears 149b is enabled to rotate about a corresponding axis of each second gear 149b without rotating about the periphery of the first gear 149a. Radially outwardly of the one or more second gears 149b, and intermeshing therewith, is the third gear 149c, which is an annular ring gear. The third gear 149c is coupled via an output shaft to the fan 138 and rotates to drive rotation of the fan 138 about the longitudinal centerline axis 112. For example, the fan shaft 145 is coupled to the third gear 149c.

The fan shaft 145 is coupled to the fan disk 142 such that rotation of the fan shaft 145 causes the plurality of fan blades 140 to rotate about the longitudinal centerline axis 112. Each of the fan blades 140 extends from a leading edge 155 and a trailing edge 157. The fan root 141 is at the fan hub 148. The fan disk 142 is defined between an inner surface 161 and an outer surface 163. The inner surface 161 is a radially-most inner surface of the fan disk 142 and the outer surface 163 is a radially-most outer surface of the fan disk 142. The fan disk 142 includes a disk bore 159 defined by an inner surface 161 of the fan disk 142. In particular, the disk bore 159 is defined from the longitudinal centerline axis 112 to the inner surface 161. The fan hub 148 includes a fan hub trailing edge radius R_{FHTE} that is defined in the radial direction from the longitudinal centerline axis 112 to the fan hub 148 at the trailing edge 157 of the fan blades 140. The turbine engine 110 also has a fan hub radius ratio that is defined as a ratio of the fan hub trailing edge radius RFHTE to a fan tip radius of the fan blades 140 (e.g., the radius from the longitudinal centerline axis 112 to the fan tip 143 at the trailing edge 157 of the fan blades 140). The fan hub radius ratio is in a range of 0.32 to 0.15. Lower fan hub radius ratios result in lower core engine inlets. A lower fan hub radius and a lower core engine inlet radius result in a core engine with a lesser diameter (e.g., smaller core engine), and, thus, a reduced overall engine weight, as compared to turbine engines with fan hub radius ratios greater than 0.15. The lower fan hub can also reduce the probability of foreign object damage (FOD), such as, for example, from bird strikes, in the core engine, as the fan tends to push the foreign objects radially outward by the centripetal force imparted to the foreign object by the spinning fan blades. A lower fan hub also improves aerodynamic efficiency of the fan.

The fan bearings 300 are radial thrust (radial shaft load) bearings that transmit a load (e.g., the radial shaft load) from the fan shaft 145 to a static structure of the turbine engine 110. The fan bearings 300 each includes one or more rolling elements 302, an inner race 304, and an outer race 306. The fan bearings 300 support rotation of the fan shaft 145. In FIG. 3, fan bearings 300 include a forward fan bearing and an aft fan bearing. The rolling elements 302 are tapered rolling elements that include tapered cylindrical bodies and are disposed between the inner race 304 and the outer race 306. In this way, the one or more fan bearings 300 are roller bearings. The outer race 306 of each of the fan bearings 300 is connected to a fan bearing support member 308. The fan bearing support member 308 is connected to a fan bearing housing 310 that is connected to a static component of the turbine engine 110. The inner race 304 is connected to the fan shaft 145. In this way, the fan bearings 300 are connected to the static component and to the fan shaft 145 such that the inner race 304, and the rolling elements 302, rotates with respect to the outer race 306, such that the fan bearings 300 support rotation of the fan shaft 145.

The fan bearings 300 are positioned aft, and radially outward, of the fan disk 142. In particular, the fan bearings 300 are positioned entirely axially aft of the fan disk 142 and entirely radially outward of the fan disk 142 (e.g., radially outward of the outer surface 163 of the fan disk 142). In this way, the fan bearings 300 are positioned radially outward of the disk bore 159 (e.g., of the inner surface 161) of the fan disk 142. The fan bearings 300 are positioned axially between the fan disk 142 and the gearbox assembly 146. Further, the fan bearings 300 are positioned radially outward of the gearbox assembly 146, particularly, radially outward of the third gear 149c.

The fan bearings 300 have a fan bearing radius R_{FBRG} that is defined in the radial direction from the longitudinal centerline axis 112 to a radial center 303 of the fan bearings 300. Particularly, the radial center 303 of the fan bearings 300 is the radial center 303 of the rolling elements 302. The fan bearings 300 also have a rolling element diameter D_{FB} of the rolling elements 302 that is defined as a distance of a straight line passing from side to side of a respective rolling element 302 through a center (e.g., the radial center 303) of the respective rolling element 302.

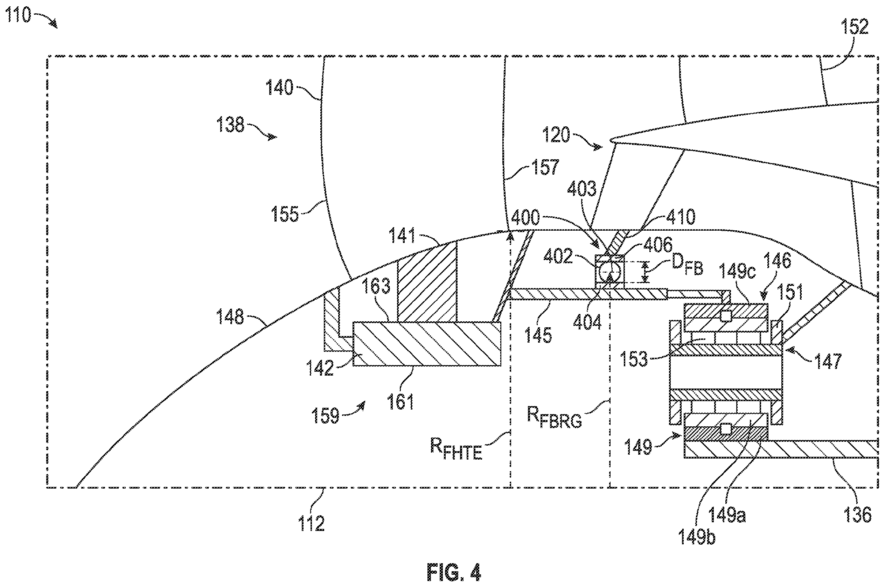

FIG. 4 is an enlarged, schematic, cross-sectional diagram of the turbine engine 110 and having one or more fan bearings 400, taken along the longitudinal centerline axis 112, according to another embodiment. The fan bearings 400 are substantially similar to the fan bearings 300 of FIG. 3. The same reference numerals will be used for components of the fan bearings 400 that are the same as or similar to the components of the fan bearings 300 discussed above. The description of these components above also applies to this embodiment, and a detailed description of these components is omitted here.

The fan bearings 400 each includes one or more rolling elements 402, an inner race 404, and an outer race 406. The fan bearings 400 support rotation of the fan shaft 145. The rolling elements 402 are balls that are disposed between the inner race 404 and the outer race 406. In this way, the fan bearings 400 are ball bearings. The turbine engine 110 also includes a fan bearing housing 410.

The fan bearings 400 are positioned aft, and radially outward, of the fan disk 142. In particular, the fan bearings 400 are positioned entirely axially aft of the fan disk 142 and entirely radially outward of the fan disk 142 (e.g., radially outward of the outer surface 163 of the fan disk 142). In this way, the fan bearings 400 are positioned radially outward of the disk bore 159 (e.g., of the inner surface 161) of the fan disk 142. The fan bearings 400 are positioned axially between the fan disk 142 and the gearbox assembly 146. Further, the fan bearings 400 are positioned radially outward of the gearbox assembly 146, particularly, radially outward of the third gear 149c.

The fan bearings 400 have a fan bearing radius R_{FBRG} that is defined in the radial direction from the longitudinal centerline axis 112 to a radial center 403 of the fan bearings 400 (e.g., of the rolling elements 402). The fan bearings 400 also have a rolling element diameter D_{FB} of the rolling elements 402 that is defined as a distance of a straight line passing from side to side of a respective rolling element 402 through a center (e.g., the radial center 403) of the respective rolling element 402.

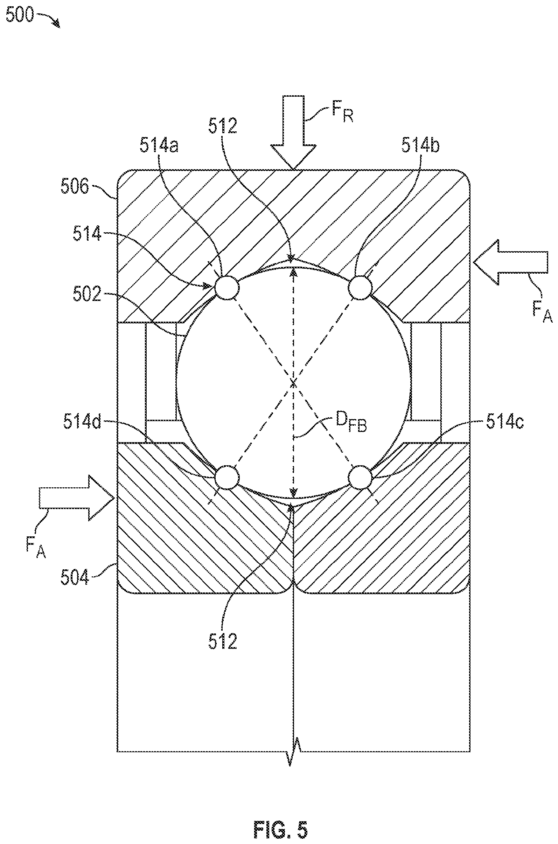

FIG. 5 is a schematic cross-sectional view of a fan bearing 500 for the turbine engine 110, according to another embodiment. The fan bearing 500 can be utilized as any of the fan bearings detailed herein. The fan bearing includes one or more rolling elements 502, an inner race 504, and an outer race 506. In some embodiments, the inner race 504 has a split ring configuration to facilitate easier mounting of the bearing and improved precision. In some embodiments, each of the inner race 504 and the outer race 506 defines a concavity having an arch 512 to allow the rolling element 502 to have four contact points 514 with the inner race 504 and the outer race 506. In particular, the fan bearing 500 has two contact points, including a first contact point 514a and a second contact point 514b, on the outer race 506 and two contact points, including a third contact point 514c and a fourth contact point 514d, on the inner race 504. In this way, the fan bearing 500 is a four-point contact ball bearing. The four-point contact design allows the fan bearing 500 to handle both radial loads F_{R} and axial loads F_{A} by transmitting the load between the second contact point 514b and the fourth contact point 514d, and between the first contact point 514a and the third contact point 514c.

In some embodiments, the fan bearing 500 has a tight bearing configuration, i.e., there is minimal clearance between the rolling elements 502 and the inner race 504 and the outer race 506. In particular, the clearance between the rolling elements 502 and the inner race 504 and the outer race 506 is dimensioned to limit axial movement of the fan shaft 145 (FIG. 1) in relation to the gearbox assembly 146 (FIG. 1) to no greater than 0.010 inches or 10 mil. In some embodiments, the clearance between the rolling elements 502 and the inner race 504 and the outer race 506 is dimensioned to limit axial movement of the fan shaft 145 to no greater than 0.007 inches or 7 mil. The fan bearing 500 limits axial endplay, i.e., axial movement of the fan shaft 145 in relation to the gearbox assembly 146, thus protecting the gearbox assembly 146 from excessive stress and facilitating a reduction in size and extension of the life of the gearbox assembly 146.

The fan bearing 500 is designed to withstand extreme conditions including high temperatures, high loads, and high rotational speeds. The materials used to construct the fan bearing 500 are selected to maximize durability, temperature resistance, and fatigue life. In some embodiments, the fan bearing 500 can be formed from steel, steel alloys, ceramic materials, cobalt and nickel-based superalloys, or polytetrafluoroethylene (PTFE) and phenolic resins. In addition, the fan bearing 500 may include coatings, such as, for example, titanium nitride or other anti-friction coatings to further reduce wear and to minimize friction.

As discussed above, the inventors sought to address the problem of sizing the fan bearings to account for the stresses encountered from the fan shaft, while balancing for minimizing the space under the fan for the fan bearings and other fan components, as well as providing a required amount of thrust for a particular size of the turbine engine. By way of testing various turbine engine architectures, the inventors experimented with different configurations of the fan bearings and the turbine engine. In particular, the inventors experimented with different configurations of the location of the fan bearings, the size of the fan bearings, the size of the rolling elements, and different takeoff thrusts. Additionally, there was a challenge in reducing the inner radius of the engine flow path and lowering the fan hub radius ratio, while increasing the fan bearing radius.

During the course of evaluating the different embodiments as set forth herein, with the goal of providing fan bearings that account for the stresses from the fan shaft, while accounting for the inner flow path radius and the fan hub radius, the inventors determined that moving the fan bearings aft of the fan disk, and increasing the fan bearing radius provided for a reduction in the inner radius of the flow path and the fan hub radius, without overly increasing the heat load on the fan bearings. The inventors further determined that moving the fan bearings radially outward enables a greater number of rolling elements, which results in a reduced rolling element diameter.

After evaluating the set of novel embodiments developed by the inventors including several different architectures of fan bearings and turbine engines with various sizes and locations, it was discovered, unexpectedly, that a set of inventor designs, producing favorable results, could be characterized by a combination of the fan hub trailing edge radius, the fan bearing radius, the rolling element diameter, and the takeoff thrust, capable of differentiating an architecture that satisfies the operational requirements (e.g., fan bearings capable of handling the stresses from the fan shaft) and the packaging requirements (e.g., lowering the fan hub radius and the inner radius of the flow path) from an architecture that does not satisfy these requirements. As such, a finite and readily ascertainable number of embodiments developed by the inventors account for the operational requirements and the packaging requirements without overly increasing the fan bearing heat load. The inventors developed a set of designs based on a size of the fan bearings, a size of the rolling elements, and a location of the fan bearings that can reduce the size and the weight of the turbine engine, while accounting for the factors discussed above. These novel designs can be characterized as a fan bearing envelope (FBE), as set forth in expression (1): $FBE = \left(\frac{{R}_{FBRG}}{{R}_{FHTE}}\right) \times \left(\frac{{D}_{FB}}{\left(\frac{{Thrust}_{TO}}{1000}\right)}\right)$ (1).

In expression (1), R_{FBRG} is the fan bearing radius, R_{FHTE} is the fan hub trailing edge radius, D_{FB} is the rolling element diameter, and Thrust_{TO} is the takeoff thrust of the turbine engine. The takeoff thrust Thrust_{TO} is a high power operation (e.g., greater than 85% of the SLS maximum engine rated thrust) of the turbine engine during a takeoff condition of the aircraft.

As discussed further below, the inventors developed fan bearing designs for different turbine engine architectures that accounts for handling the stresses from the fan shaft during operation, while reducing the fan hub radius, and, thus, providing for an improved specific flow through the fan and reducing the fan diameter required to achieve a certain thrust or reduces the fan pressure ratio and improves propulsive efficiency of the fan. These improved fan bearing designs can be characterized according to a defined range for the FBE.

Table 1 represents exemplary embodiments 1 to 12 and their corresponding FBE values for various turbine engines and fan bearings. Embodiments 1 to 12 may represent the turbine engine 110 of FIG. 1 (e.g., ducted engine) or the turbine engine 210 of FIG. 2 (e.g., unducted fan engine) and can be applied to any of the fan bearings detailed herein. In Table 1, the FBE values were determined based on expression (1) described above, and using fan hub trailing edge radius, fan bearing radius, fan bearing diameter values in millimeters and takeoff thrust values in kilo-Newtons. In particular, embodiments 1, 2, 7, 9, and 11 are tapered roller bearings (e.g., the fan bearings 300 of FIG. 3). Embodiments 3 to 6, 8, 10, and 12 are ball bearings (e.g., the fan bearings 400 of FIG. 4 or the fan bearing 500 of FIG. 5).

**Table 1**

| **Emb.** | **R_{FHTE} (mm)** | **R_{FBRG} (mm)** | **R_{FBRG} / R_{FHTE}** | **D_{FB} (mm)** | **Thrust_{TO} (kN)** | **Fan Bearing Envelope (FBE)** |
|---|---|---|---|---|---|---|
| 1 | 360.934 | 212.09 | 0.588 | 19.05 | 155.688 | 71.901 |
| 2 | 628.396 | 312.42 | 0.497 | 19.05 | 155.688 | 60.834 |
| 3 | 360.934 | 212.09 | 0.588 | 50.80 | 155.688 | 191.735 |
| 4 | 628.396 | 312.42 | 0.497 | 50.80 | 155.688 | 162.224 |
| 5 | 360.934 | 212.09 | 0.588 | 57.15 | 155.688 | 215.702 |
| 6 | 360.934 | 212.09 | 0.588 | 63.50 | 155.688 | 239.669 |
| 7 | 103.124 | 60.60 | 0.588 | 5.00 | 44.482 | 66.050 |
| 8 | 103.124 | 60.60 | 0.588 | 15.00 | 44.482 | 198.151 |
| 9 | 902.335 | 530.23 | 0.588 | 50.80 | 389.220 | 76.694 |
| 10 | 902.335 | 530.23 | 0.588 | 127.00 | 389.220 | 191.735 |
| 11 | 1191.082 | 699.90 | 0.588 | 63.50 | 513.770 | 72.627 |
| 12 | 1191.082 | 699.90 | 0.588 | 170.00 | 513.770 | 194.434 |

The inventor designs providing the aforementioned benefits including achieving a lower radius ratio (ratio of hub to fan tip radii) for a rated thrust, or percentage thereof at takeoff. During the course of creating those designs it was determined what ranges would be suitable to achieve the desired results, while taking into account fan shaft stresses, packaging and accessibility, reliability and lubrication requirements for the engine. The values for terms used to compute an FBE value are strictly limited to certain ranges based on the various designs evaluated where those values had varied; otherwise, the engine made may not produce the favorable results.

The FBE is only valid for a fan hub trailing edge radius R_{FHTE} in a range of ninety millimeters (90 mm) to one thousand two hundred millimeters (1,200 mm). In some embodiments, the fan hub trailing edge radius R_{FHTE} is in a range of one hundred millimeters (100 mm) to nine hundred millimeters (900 mm). The ranges of the fan hub trailing edge radius R_{FHTE} provide for a fan hub radius ratio that satisfies the operational requirements and the packaging requirements of a particular engine without overly increasing the fan bearing heat load. Values of the fan hub trailing edge radius R_{FHTE} outside of the ranges disclosed herein either have a fan hub radius ratio that is too small such that the fan bearings cannot be packaged under the fan disk or too great such that the aerodynamic efficiency of the fan is reduced.

The FBE is only valid for a fan bearing radius R_{FBRG} in a range of fifty millimeters (50 mm) to seven hundred millimeters (700 mm). In some embodiments, the fan bearing radius R_{FBRG} is in a range of sixty millimeters (60 mm) to five hundred fifty millimeters (550 mm). The ranges of the fan bearing radius R_{FBRG} provide for a lower fan hub radius ratio that satisfies the operational requirements and the packaging requirements of a particular engine without overly increasing the fan bearing heat load. Values of the fan bearing radius R_{FBRG} outside of the ranges disclosed herein either have a fan hub radius ratio that is too small such that the fan bearings cannot be packaged under the fan disk or too great such that the aerodynamic efficiency of the fan is reduced and the heat load on the fan bearings is increased so much that the fan bearings require a great amount of lubricant to cool the fan bearings. Thus, fan bearings having a fan bearing radius R_{FBRG} greater than seven hundred millimeters (700 mm) also result in a greater sized lubrication system, and, thus, results in a heavier turbine engine.

The FBE is only valid for a ratio of the fan bearing radius to the fan hub trailing edge radius (R_{FBRG} / R_{FHTE}) in a range of 0.4 to 1.0. The range of R_{FBRG} / R_{FHTE} provides satisfies the operational requirements and the packaging requirements of a particular engine without overly increasing the fan bearing heat load. Values of the R_{FBRG} / R_{FHTE} outside of the ranges disclosed herein either have a fan hub radius ratio that is too small such that the fan bearings cannot be packaged under the fan disk or too great such that the aerodynamic efficiency of the fan is reduced. In particular, values of R_{FBRG} / R_{FHTE} greater than 1.0 provide for the fan bearings to be radially outward of the fan hub trailing edge, and, thus, reduce the radius of the core engine inlet. Values of R_{FBRG} / R_{FHTE} less than 0.4 provide for fan bearings that require larger rolling elements to account for the stresses, while also increasing the fan hub radius and the inner radius of the flow path.

The FBE is only valid for a rolling element diameter D_{FB} in a range of three millimeters (3 mm) to one hundred fifty millimeters (150 mm). In some embodiments, the rolling element diameter D_{FB} is in a range of five millimeters (5 mm) to one hundred twenty-seven millimeters (127 mm).

The FBE is only valid for a takeoff thrust Thrust_{TO} in a range of forty kilo-Newtons (40 kN) to five hundred twenty-five kilo-Newtons (525 kN). In some embodiments, the takeoff thrust Thrust_{TO} is in a range of forty-four kilo-Newtons (44 kN) to four hundred fifty kilo-Newtons (450 kN).

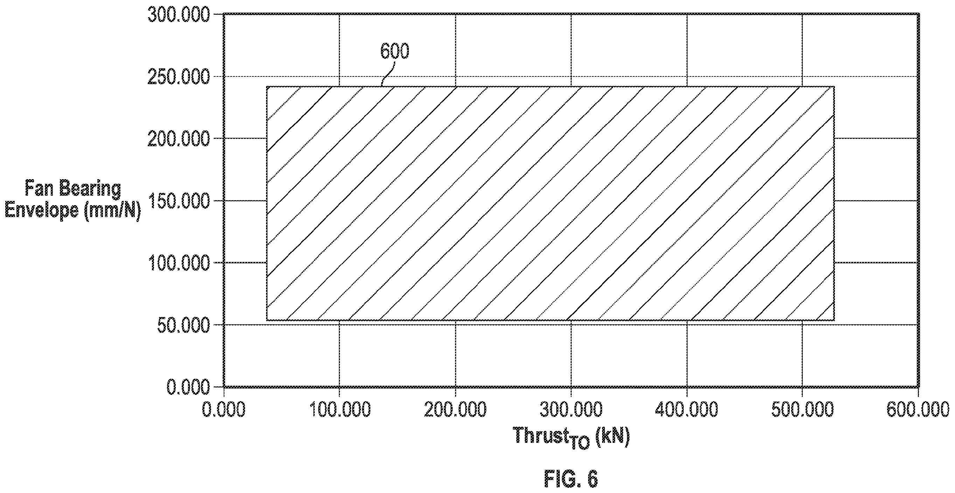

FIG. 6 represents, in graph form, the FBE as a function of the Thrust_{TO} of the turbine engine, according to the present disclosure. An area 600 represents the boundaries of the FBE. The FBE is in a range of fifty-four millimeters per Newton (54 mm/N) to two hundred forty millimeters per Newton (240 mm/N) for a takeoff thrust Thrust_{TO} in a range of forty kilo-Newtons (40 kN) to five hundred twenty-five kilo-Newtons (525 kN). The range of the FBE identifies the specific architectures (fan bearing sizing and location), rolling elements sizing, and takeoff thrusts, while accounting for the stresses from the fan shaft and the inner flow path radius and the fan hub radius. In particular, if the FBE is within the area 600, then the fan bearing and the turbine engine architecture are capable of handling the stresses from the fan shaft during operation, while reducing the fan hub radius, and, thus, providing for an improved specific flow through the fan and reducing the fan diameter required to achieve a certain thrust, or reduces the fan pressure ratio and improves propulsive efficiency of the fan. If the FBE is outside of the area 600, then the fan bearings may become damaged or fail under the stresses from the fan shaft, or the fan hub radius (e.g., the inner radius of the flow path) is too great, such that the fan efficiency decreases or the specific flow through the fan is reduced for a certain thrust. Thus, the turbine engine having an FBE within the area 600 provides for an improved fan bearing architecture that is capable of handling the stresses from the fan shaft, while accounting for the fan hub radius to improve propulsive efficiency and specific flow for achieving a certain thrust.

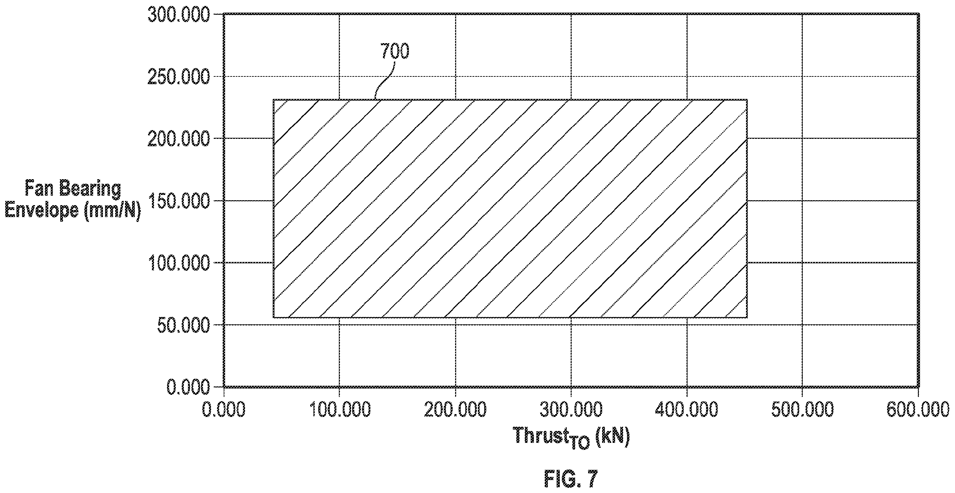

FIG. 7 represents, in graph form, the FBE as a function of the Thrust_{TO}, according to another embodiment. An area 700 represents the boundaries of the FBE. The FBE is in a range of fifty-eight millimeters per Newton (58 mm/N) to two hundred thirty millimeters per Newton (230 mm/N) for a takeoff thrust Thrust_{TO} in a range of forty-four kilo-Newtons (44 kN) to four hundred fifty kilo-Newtons (450 kN). The range of the FBE identifies the specific architectures (fan bearing sizing and location), rolling elements sizing, and takeoff thrusts, while accounting for the stresses from the fan shaft and the inner flow path radius and the fan hub radius. In particular, if the FBE is within the area 700, then the fan bearing and the turbine engine architecture are capable of handling the stresses from the fan shaft during operation, while reducing the fan hub radius, and, thus, providing for an improved specific flow through the fan and reducing the fan diameter required to achieve a certain thrust, or reduces the fan pressure ratio and improves propulsive efficiency of the fan. If the FBE is outside of the area 700, then the fan bearings may become damaged or fail under the stresses from the fan shaft, or the fan hub radius (e.g., the inner radius of the flow path) is too great, such that the fan efficiency decreases or the specific flow through the fan is reduced for a certain thrust. Thus, the turbine engine having an FBE within the area 700 provides for an improved fan bearing architecture that is capable of handling the stresses from the fan shaft, while accounting for the fan hub radius to improve propulsive efficiency and specific flow for achieving a certain thrust.

Further aspects are provided by the subject matter of the following clauses.

A turbine engine comprising a fan having a plurality of fan blades coupled to a fan disk that is drivingly coupled to a fan shaft, the fan disk defining a disk bore, a fan hub that defines an inner radius of a flow path of the turbine engine, the plurality of fan blades extending radially outward from the fan hub, and one or more fan bearings that support rotation of the fan shaft, the one or more fan bearings including one or more rolling elements, being positioned axially aft of the fan disk and radially outward of the fan disk, and being characterized by a fan bearing envelope in a range of 54 mm/N to 240 mm/N, the fan bearing envelope being given by $\left(\frac{{R}_{FBRG}}{{R}_{FHTE}}\right) \times \left(\frac{{D}_{FB}}{\left(\frac{{Thrust}_{TO}}{1000}\right)}\right)$, wherein R_{FBRG} is a fan bearing radius of the one or more fan bearings, R_{FHTE} is a fan hub trailing edge radius of the fan hub at a trailing edge of the plurality of fan blades, D_{FB} is a rolling element diameter of the one or more rolling elements, and Thrust_{TO} is a takeoff thrust of the turbine engine.

The turbine engine of the preceding clause, wherein the fan bearing envelope is in a range of 58 mm/N to 230 mm/N.

The turbine engine of any preceding clause, wherein R_{FHTE} is in a range of 90 mm to 1,200 mm.

The turbine engine of any preceding clause, wherein R_{FHTE} is in a range of 100 mm to 900 mm.

The turbine engine of any preceding clause, wherein R_{FBRG} is in a range of 50 mm to 700 mm.

The turbine engine of any preceding clause, wherein R_{FBRG} is in a range of 60 mm to 550 mm.

The turbine engine of any preceding clause, wherein R_{FBRG} / R_{FHTE} is in a range of 0.4 to 1.0.

The turbine engine of any preceding clause, wherein D_{FB} is in a range of 3 mm to 150 mm.

The turbine engine of any preceding clause, wherein D_{FB} is in a range of 5 mm to 127 mm.

The turbine engine of any preceding clause, wherein Thrust_{TO} is in a range of 40 kN to 525 kN.

The turbine engine of any preceding clause, wherein Thrust_{TO} is in a range of 44 kN to 450 kN.

The turbine engine of any preceding clause, wherein the one or more fan bearings are roller bearings.

The turbine engine of any preceding clause, wherein the one or more fan bearings are ball bearings.

The turbine engine of any preceding clause, wherein the one or more fan bearings are four-point contact ball bearings.

The turbine engine of any preceding clause, further comprising a turbo-engine including a compressor section, a combustor, and a turbine section, the turbo-engine having an input shaft that couples the compressor section to the turbine section, and a gearbox assembly, the fan shaft being drivingly coupled to the input shaft through the gearbox assembly, wherein the one or more fan bearings are positioned axially between the fan disk and the gearbox assembly.

The turbine engine of the preceding clause, wherein the fan bearings are positioned radially outward of the gearbox assembly.

A turbine engine comprising a turbo-engine including a compressor section, a combustor, and a turbine section, the turbo-engine having an input shaft that couples the compressor section to the turbine section, a fan having a plurality of fan blades coupled to a fan disk that is drivingly coupled to a fan shaft, the fan disk defining a disk bore, a fan hub that defines an inner radius of a flow path of the turbine engine, the plurality of fan blades extending radially outward from the fan hub, a gearbox assembly, the fan shaft being drivingly coupled to the input shaft through the gearbox assembly, and one or more fan bearings that support rotation of the fan shaft, the one or more fan bearings including one or more rolling elements that are at least one of roller bearings or ball bearings, being positioned axially aft of the fan disk, axially between the fan disk and the gearbox assembly, and radially outward of the fan disk, and being characterized by a fan bearing envelope in a range of 54 mm/N to 240 mm/N, the fan bearing envelope being given by $\left(\frac{{R}_{FBRG}}{{R}_{FHTE}}\right) \times \left(\frac{{D}_{FB}}{\left(\frac{{Thrust}_{TO}}{1000}\right)}\right)$, wherein R_{FBRG} is a fan bearing radius of the one or more fan bearings, R_{FHTE} is a fan hub trailing edge radius of the fan hub at a trailing edge of the plurality of fan blades, D_{FB} is a rolling element diameter of the one or more rolling elements, and Thrust_{TO} is a takeoff thrust of the turbine engine, R_{FBRG} / R_{FHTE} being a range of 0.4 to 1.0, and Thrust_{TO} being in a range of 40 kN to 525 kN.

The turbine engine of the preceding clause, wherein R_{FHTE} is in a range of 90 mm to 1,200 mm.

The turbine engine of any preceding clause, wherein R_{FBRG} is in a range of 50 mm to 700 mm.

The turbine engine of any preceding clause, wherein D_{FB} is in a range of 3 mm to 150 mm.

The turbine engine of the preceding clause, wherein the fan bearing envelope is in a range of 58 mm/N to 230 mm/N.

The turbine engine of any preceding clause, wherein R_{FHTE} is in a range of 100 mm to 900 mm.

The turbine engine of any preceding clause, wherein R_{FBRG} is in a range of 60 mm to 550 mm.

The turbine engine of any preceding clause, wherein D_{FB} is in a range of 5 mm to 127 mm.

The turbine engine of any preceding clause, wherein Thrust_{TO} is in a range of 44 kN to 450 kN.

The turbine engine of any preceding clause, wherein the one or more fan bearings are roller bearings.

The turbine engine of any preceding clause, wherein the one or more fan bearings are ball bearings.

The turbine engine of any preceding clause, wherein the one or more fan bearings are four-point contact ball bearings.

The turbine engine of the preceding clause, wherein the fan bearings are positioned radially outward of the gearbox assembly.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A turbine engine (110, 210) comprising:
a fan (138, 252) having a plurality of fan blades (140, 254) coupled to a fan disk (142) that is drivingly coupled to a fan shaft (145, 256), the fan disk (142) defining a disk bore (159);
a fan hub (148, 257) that defines an inner radius of a flow path of the turbine engine (110, 210), the plurality of fan blades (140, 254) extending radially outward from the fan hub (148, 257); and
one or more fan bearings (300, 400, 500) that support rotation of the fan shaft (145, 256), the one or more fan bearings (300, 400, 500) including one or more rolling elements (302, 402, 502), being positioned axially aft of the fan disk (142) and radially outward of the fan disk (142), and being **characterized by** a fan bearing envelope in a range of 54 mm/N to 240 mm/N, the fan bearing envelope being given by: $\left(\frac{{R}_{FBRG}}{{R}_{FHTE}}\right) \times \left(\frac{{D}_{FB}}{\left(\frac{{Thrust}_{TO}}{1000}\right)}\right)$
wherein R_{FBRG} is a fan bearing radius of the one or more fan bearings (300, 400, 500), R_{FHTE} is a fan hub trailing edge radius of the fan hub (148, 257) at a trailing edge (157) of the plurality of fan blades (140, 254), D_{FB} is a rolling element diameter of the one or more rolling elements (302, 402, 502), and Thrust_{TO} is a takeoff thrust of the turbine engine (110, 210).

2. The turbine engine (110, 210) of claim 1, wherein the fan bearing envelope is in a range of 58 mm/N to 230 mm/N.

3. The turbine engine (110, 210) of any preceding claim, wherein R_{FHTE} is in a range of 90 mm to 1,200 mm.

4. The turbine engine (110, 210) of any preceding claim, wherein R_{FHTE} is in a range of 100 mm to 900 mm.

5. The turbine engine (110, 210) of any preceding claim, wherein R_{FBRG} is in a range of 50 mm to 700 mm.

6. The turbine engine (110, 210) of any preceding claim, wherein R_{FBRG} is in a range of 60 mm to 550 mm.

7. The turbine engine (110, 210) of any preceding claim, wherein R_{FBRG} / R_{FHTE} is in a range of 0.4 to 1.0.

8. The turbine engine (110, 210) of any preceding claim, wherein D_{FB} is in a range of 3 mm to 150 mm.

9. The turbine engine (110, 210) of any preceding claim, wherein D_{FB} is in a range of 5 mm to 127 mm.

10. The turbine engine (110, 210) of any preceding claim, wherein Thrust_{TO} is in a range of 40 kN to 525 kN.

11. The turbine engine (110, 210) of any preceding claim, wherein Thrust_{TO} is in a range of 44 kN to 450 kN.

12. The turbine engine (110, 210) of any preceding claim, wherein the one or more fan bearings (300) are roller bearings.

13. The turbine engine (110, 210) of any preceding claim, wherein the one or more fan bearings (400, 500) are ball bearings.

14. The turbine engine (110, 210) of claim 13, wherein the one or more fan bearings (500) are four-point contact ball bearings.

15. The turbine engine (110, 210) of any preceding claim, further comprising a turbo-engine (116, 220) including a compressor section (121), a combustor (230), and a turbine section (127), the turbo-engine (116, 220) having an input shaft that couples the compressor section (121) to the turbine section (127), and a gearbox assembly (146, 255), the fan shaft (145, 256) being drivingly coupled to the input shaft through the gearbox assembly (146, 255), wherein the one or more fan bearings (300, 400, 500) are positioned axially between the fan disk (142) and the gearbox assembly (146, 255).
